Europäisches Patentamt

European Patent Office

Office européen des brevets

(11) Publication number: **0 050 956**
**B1**

(12) **EUROPEAN PATENT SPECIFICATION**

(45) Date of publication of patent specification: **02.05.85**

(21) Application number: **81304925.1**

(22) Date of filing: **20.10.81**

(51) Int. Cl.⁴: **B 29 C 35/04**

(54) **Process for the vulcanization of elastomer products.**

(30) Priority: **27.10.80 JP 151170/80**
**27.10.80 JP 151171/80**

(43) Date of publication of application:
**05.05.82 Bulletin 82/18**

(45) Publication of the grant of the patent:
**02.05.85 Bulletin 85/18**

(84) Designated Contracting States:
**DE FR GB IT**

(56) References cited:
**GB-A-1 501 943**
**GB-A-2 033 777**
**US-A-2 635 293**
**US-A-3 608 624**
**US-A-3 942 922**
**US-A-4 222 721**

(73) Proprietor: **SUMITOMO RUBBER INDUSTRIES LIMITED**
**No. 1-1, Tsutsui-cho 1-chome**
**Chuo-ku Kobe-shi Hyogo-ken (JP)**

(72) Inventor: **Arimatsu, Toshio**
**2-8-8, Matsunouchi**
**Akashi-shi Hyogo-ken (JP)**
Inventor: **Sakon, Tohatirou**
**15-12, Heiwadai-cho, 2-chome**
**Nagata-ku Kobe-shi Hyogo-ken (JP)**

(74) Representative: **Allard, Susan Joyce et al**
**BOULT, WADE & TENNANT 27 Furnival street**
**London EC4A 1PQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention generally relates to a process for the vulcanization of elastomer products made, for example, of synthetic rubber, etc., and more particularly, to an improved process for the vulcanization of elastomer products, especially pneumatic tires and the like.

Conventionally, in the vulcanization of pneumatic tires for motor vehicles, etc., a steam vulcanizing system which employs steam as a heating medium and a hot water vulcanizing system which employs not water as a heating medium have been generally adopted. In these systems, the application of predetermined degrees of temperature and pressure is essential, but, while the supply of pressure is indispensable up to the termination of the heating process, a continuous supply of heat is not required if sufficient heat insulation is provided or if heat equivalent to the heat radiated is supplied to the system, provided that the proper amount of heat is supplied at the initial stage of the heating process to attain the standard temperature necessary for the vulcanization.

However, in the known steam vulcanization system as described above, partly due to the employment of saturated steam, it is necessary to continuously supply the steam at a predetermined temperature and pressure up to the termination of the heating process, even after the tire to be processed has reached the standard temperature at which point the supply of heat is not required so much. In the hot water vulcanizing system referred to above, since the temperature and pressure are independently changeable, even if pressure has to be continuously supplied up to the completion of the heating step, the supply of heat for maintaining the temperature is assumed to become unnecessary, after the tire to be processed has reached the standard temperature. However, owing to the large specific heat of water, when the temperature of hot water is lowered upon terminating the supply of heat, the temperature of the tire is also undesirably lowered due to the absorption of the heat by water, and thus, it is required, after all, to continuously supply hot water at a predetermined temperature and pressure up to the termination of the heating process. Since the known process as described above are, of course, very wasteful from the energy saving viewpoint there has recently been at attempt to employ a combination of steam or hot water and gas in the heating process for the vulcanization of tires. This gas, is one produced by the so-called burning furnace system in which the exhaust gas (mainly composed of nitrogen) obtained by subjecting raw gas, e.g. propane gas, butane gas or city gas, to complete combustion in a burning furnace is cooled down close to room temperature and pressurized by a compressor. Therefore, not only is the energy cost high, thus going against the requirements for savings of resources, but the control of the ratio of air for burning is not easy due to the unsteady fuel gas compositions. Furthermore, the construction of an arrangement therefor with a small burden is difficult owing to the presence of carbonic acid, nitric acid, etc., brought about by impurities such as carbon dioxide, nitrogen oxides, etc., and thus, for example, effective utilization of the used inactive or inert gas dicharged is not readily effected, with a consequent high installation cost, while there is a possibility that toxic gases such as carbon monoxide and nitrogen oxides, which may give rise to public pollution, may be developed.

GB—A—1501943 discloses a process for the vulcanization of elastomeric products, in particular elastomeric power transmission belting, which includes the steps of heating under pressure the elastomeric product disposed between a mould and a pressure chamber by supplying thereto a hot fluid, maintaining the fluid in the chamber at a pressure and for a time sufficient at least to partially soften the elastomeric product, delivering into the chamber in admixture with the fluid a gas of low heat capacity relative to the hot fluid and pressurizing the gas and fluid to cause the elastomeric belting to flow into conformance with the mould surface.

We have now developed a process according to claim 1 for the vulcanization of elastomer products based on the so-called resource saving system, which is highly efficient, reliable and easily controllable and can be readily introduced into production lines at a low energy cost. This process is capable of further improving the resource saving effect through effective utilization of discharged inert gas, with a simultaneous improvement in the qualities of the resulting vulcanized elastomer products, in particular having regard to preventing the deterioration of the inner surface of the tire and with a simultaneous large improvement in the bladder life. The present invention will be further described with reference to the following description taken in conjunction with the preferred embodiment thereof with reference to the accompanying drawings, in which:—

Figure 1 is a block diagram explaining the process for vulcanization of elastomer products according to one preferred embodiment of the present invention,

Figure 2 is a diagram similar to Figure 1, which shows a particular modification thereof,

Figure 3 is a block diagram similar to Figure 1, which shows another particular modification thereof, and

Figure 4 is a diagram similar to Figure 3, which shows a further particular modification thereof.

Before the description of the present invention proceeds, it is to be noted that like parts are designated by like numerals and symbols throughout the several views of the accompanying drawings.

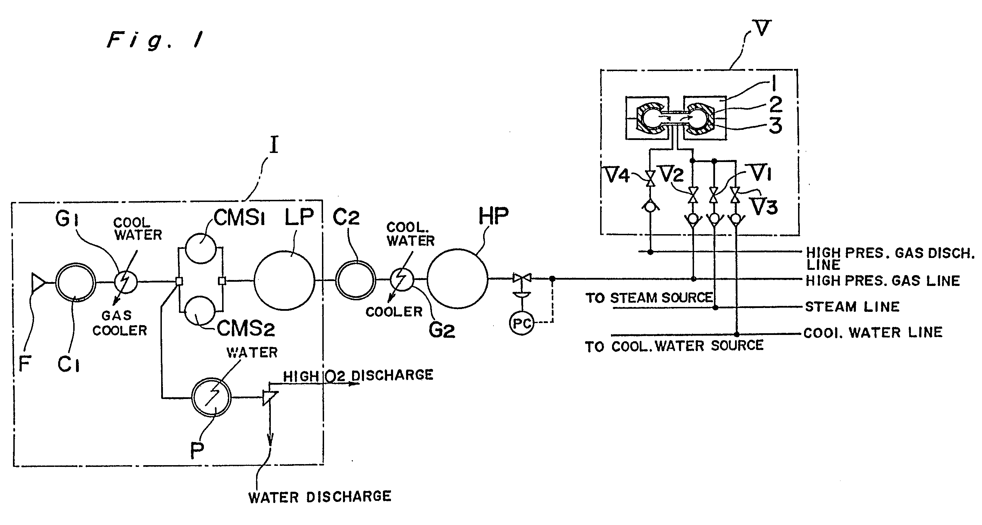

According to Figure 1, the process for the vulcanization of elastomer products includes the steps of supplying a vulcanizing medium into the elastomer product mounted in a metal mould through an expandable bag-like member (i.e. a bladder) or directly without passing through such a bag-like member, suspending the supply of the vulcanizing medium when the elastomer product has reached a predetermined temperature or when a predetermined time has elapsed, and subsequently supplying, as a heat retaining medium, an inert gas extracted from atmospheric air by using molecular sieves which has an oxygen concentration therein of less than approximately 1000 ppm and maintained at least under approximately the same pressure as that of the vulcanizing medium, so as to maintain the elastomer product at the predetermined temperature for the remainder of the heating step.

It is to be noted here that the elastomer products include, for example, pneumatic tires, vulcanizable moulded items, etc., and the vulcanizing medium may be hot water, steam, cooling water and the like, while the expandable bag-like member is, for example, a curing bag or bladder employed in the vulcanization of pneumatic tires, which curing bag or bladder is disposed between the vulcanizing medium and the elastomer product when there is a possibility that the life of the elastomer product is adversely affected by surface deterioration through the direct contact of the elastomer product with the heating medium, especially steam.

For the production of the inactive gas or inert gas, an inert gas generating unit utilizing molecular sieves and having the basic construction as follows is employed.

As shown in Figure 1, in the inert gas generating unit I, atmospheric air drawn in through a suction filter F is compressed by a compressor C1 coupled therewith, to a pressure, for example, of approximately 3 kg/cm²G (3.95 · 10⁵Pa), and after being cooled and dehumidified by a subsequent gas cooler G1 to normal temperature, is led to the lower portions of adsorption tanks CMS1 and CMS2 filled with molecular sieves, for example, carbon molecular sieves, which are particularly preferred owing to the superior adsorbing capacity especially with regard to their capability of adsorbing residual oxygen and their highly economical nature. The adsorption tanks CMS1 and CMS2 are provided as a pair and are arranged to be alternatively changed over for use every one minute, one for the adsorption and the other for desorption cycle, through a pressure switching system (not shown). The molecular sieves in the adsorption tank for the desorption process are subjected to desorption for regeneration through suction under reduced pressure, for example, down to pressures of 60 to 100 mmHg (7,98 · 10³ to 13,3 · 10³Pa) by a water seal vacuum pump P. The inert gas, mainly containing nitrogen discharged from the adsorption tank and having an oxygen content of less than 1000 ppm, is stored in a low pressure storage tank LP.

According to the present invention, it is possible to obtain an inert gas having a still higher purity by the addition of a reducing gas, especially hydrogen (which may be obtained by ammonia breakdown, methanol break down or the electrolysis of water) to the inert gas obtained by the inert gas generating unit I as described above, with subsequent deoxidation. The low pressure inert gas obtained by the generating unit I is further compressed by another compressor C2 connected to the low pressure storage tank LP, so that it has a higher pressure, for example, 30 kg/cm²G (30.41 · 10⁵Pa) and it is stored for subsequent use, in a high pressure storage tank HP which is coupled to the compressor C2 through a gas cooler G2 and also to a high pressure gas line through a valve with a pressure controller.

The pressure of the inert gas is arranged to be at least approximately the same as the pressure of the vulcanizing medium (for example, steam), or to be higher than that of the vulcanizing medium, for example the inert gas pressure may be 18 atmospheres (18.23 · 10⁵Pa) pressure with respect to a vulcanizing medium pressure of 15 atmospheres (15.19 · 10⁵Pa) pressure.

Referring now to the drawings, particularly to Figure 1, the process for the vulcanization of elastomer products according to one preferred embodiment of the present invention will be described step by step hereinbelow.

In Figure 1, there is shown on the right hand side thereof, a vulcanizing unit V which generally includes a metal mould 1 in which a pneumatic tire 2 to be processed is accommodated, and pipe lines respectively leading through corresponding valves V4, V2, V1 and V3 to a high pressure gas discharge line, a high pressure gas line coupled to the high pressure storage tank HP, a steam line and a cooling water line. The pipe lines communicate with a space inside the tire 2, through a curing bag or bladder 3 provided in contact with the inner wall of the tire 2.

(1) Firstly, with respect to the pneumatic tire 2 (for example, of size 175SR14) accommodated in the metal mould 1, the valve V1 of the steam line is opened and the steam at 18 atmospheres pressure is supplied to the tire 2 through the bladder 3 for five minutes. If a large heat of radiation is expected, depending on the types of sizes of the tires, the standard time required for the introduction of the steam may be set to be somewhat longer than above.

(2) After five minutes have elapsed at which time the tire 2 has reached the standard temperature of, for example, 200°C) the valve V1 for the steam line is closed by a process timer (not shown), to suspend the supply of steam to the tire. The arrangement may be so modified that, with a sensor (not shown) inserted at a shoulder portion of the tire 2 for temperature measurement the supply of steam is suspended when the desired standard temperature has been reached.

(3) Simultaneously with the closing of the valve V1 of the steam line, the valve V2 for the high pressure gas line is opened. The inert gas which is preliminarily extracted from the atmospheric air so as to have an oxygen concentration of less than 50 ppm and more preferably, of about 5 ppm, under 18 atmospheres pressure at normal temperature, and which is stored in the high pressure storage tank HP as described earlier, is supplied instead of the steam, to the tire 2 through the bladder 3 as a heat retaining medium. It is to be noted here that, the oxygen concentration should be less than approximately 1000 ppm, and more preferably less than approximately 50 ppm, or most preferably in the range from 4 to 5 ppm from the viewpoint of preventing deterioration of the inner surface of the bladder or of the tire when the bladder is not employed. It should also be noted that, since the inert gas as described above has a low heat conductivity, with a small specific heat, it reduces to a minimum the heat radiation of the tire 2.

(4) After a lapse of five minutes the valve V2 for the high pressure gas line is closed by the process timer to suspend the supply of the inert gas and, at this point, the heating process is substantially terminated.

(5) Simultaneously with the closing of the valve V2 for the high pressure gas line, the valve V3 for the cooling water line and the valve V4 for the high pressure gas discharge line are opened. As the cooling water is supplied to the tire 2 through the bladder 3, a mixture of the inert gas and steam, and a mixture of the inert gas and cooling water are discharged to the atmosphere through the high pressure gas discharge line.

It is to be noted that, the vulcanizing process subsequent to the cooling process is effected by means of normal procedures, and thereafter, the whole vulcanizing process is completed.

It should also be noted that, in the inert gas generating unit I as described in the foregoing, the gas containing oxygen at high concentration removed from the adsorption tank in the desorption process, may be effectively utilized, for example, for an air-exposure process in sewage treatment so as to improve the treating efficiency or for supply to boilers to improve thermal efficiency.

Since the inert gas at high purity preliminarily extracted from the atmospheric air through the use of molecular sieves is employed as the heat retaining medium for part of the heating process to replace the conventional vulcanizing medium, various favourable effects as follows have been obtained:—

(a) The energy cost can be reduced to approximately 1/2 as compared with that in the conventional vulcanizing process (for example, the heating process employing heated water).

(b) The process of the present invention has advantages not possessed by the conventional gas vulcanizing process which utilizes the inert gas produced by the burning furnace system as described below.

(i) Since the impurity content of the inert gas is small, the load for the compressor is reduced, whilst pipings, appliances etc. employed in the process are free from corrosion;

(ii) From the advantage as described in the above item (i), it becomes possible to store or collect the used inert gas, whilst the rate for re-utilization of resources may be improved due to high purity of the restored inert gas;

(iii) Since there is no problem relating to fluctuation of the fuel gas composition, the production of the inert gas may be readily controlled;

(iv) Since no toxic gas such as carbon monoxide, etc. is produced, the process of the present invention is preferred from the view point of safety and sanitation;

(v) The absence of nitrogen oxide reduces the possibility of public pollution;

(vi) The by-product (high concentration $O_2$) obtained by the inert gas generating unit may be utilised;

(vii) The life of the expandable bag-like member (i.e. bladder) may be prolonged as follows.

By the use of an automatic type press (not shown) having a bladder made of butyl rubber, comparative experiments were made for the service life of the bladder on repeated use, i.e. the number of endurable times for use, with respect to the case where tires of 175SR14 size are vulcanized in the conventional process and the case where the tires are vulcanized in the heating process employing steam at 18 atmospheres pressure and an inert gas for a 10 minute cycle, with the results as follows (the life of the bladder in the conventional process is set at 100).

| Oxygen concentration in the inert gas | Bladder life |
|---|---|
| 5 ppm | 120~150 |
| 50 ppm | 110~120 |
| 1% | 20~50 |
| 0.1% | 80~90 |

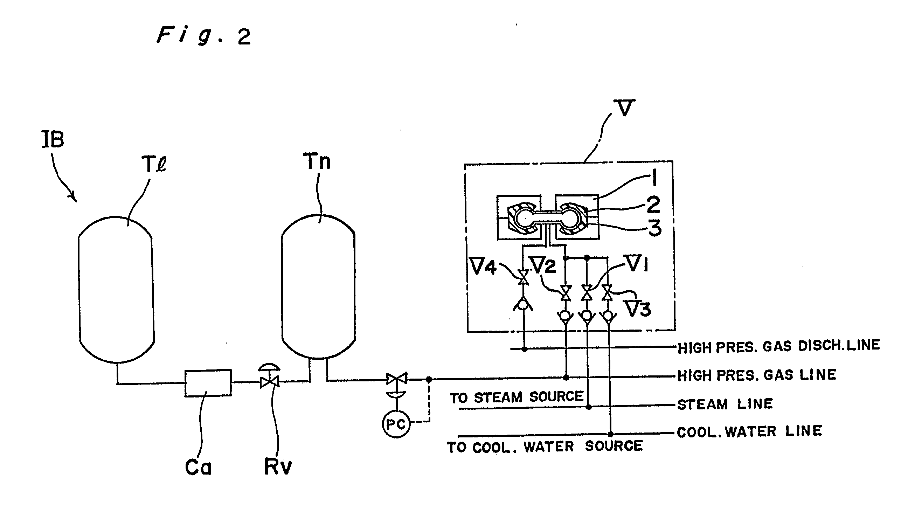

Referring to Figure 2, there is shown a modification of the arrangement of Figure 1. In this modification, the inert gas generating unit I, compressor C2, gas cooler G2, and high pressure storage tank HP described as employed in the embodiment of Figure 1 are replaced by a nitrogen gas generating unit Ib including a liquid $N_2$ storage tank T coupled, through a carburettor Ca and a pressure reduction valve Rv, to a nitrogen receiver tank Tn which is further connected to the high pressure gas line via a valve associated with a pressure controller. In the arrangement of Figure 2, liquid nitrogen contained in the liquid $N_2$ storage tank T is formed through the carburettor Ca and pressure reduction valve Rv into nitrogen gas, which is utilized for the same purpose and in the same manner as the inert gas in the embodiment of Figure 1. In the above case, nitrogen at a high purity may be obtained.

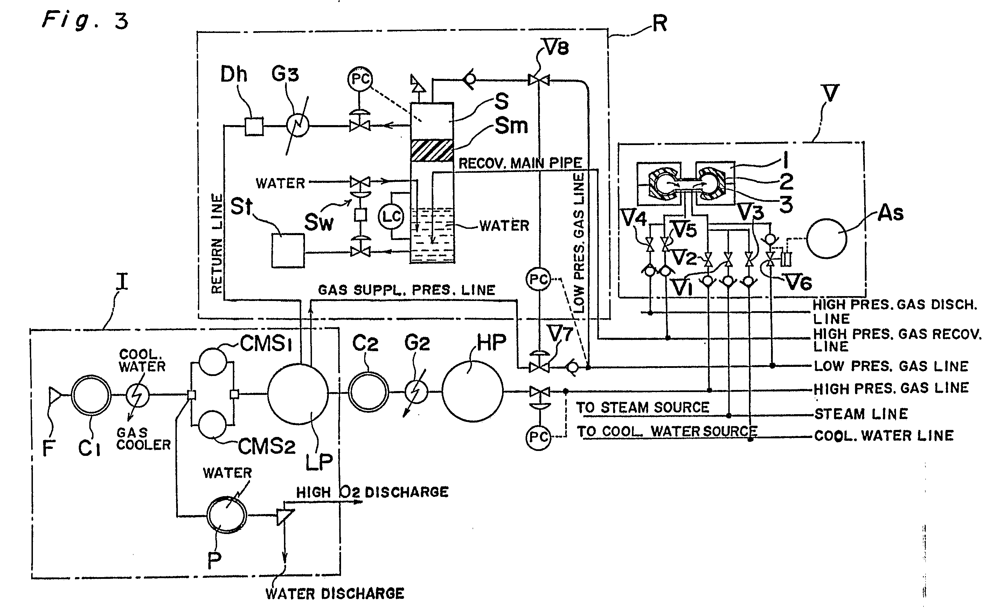

Referring also to Figure 3, there is shown another modification of the process for the vulcanization of elastomer products of Figure 1. The modified process shown in Figure 3 for the vulcanization of elastomer products, which includes the steps of supplying the vulcanizing medium into the elastomer product mounted in the metal mould through the bladder or directly without passing through the bladder, suspending supply of the vulcanizing medium when the elastomer product has reached a predetermined temperature or when a predetermined time period has elapsed, and subsequently supplying, as heat retaining medium, an inert gas preliminarily extracted from atmospheric air using molecular sieves and maintained at least under approximately the same pressure as that of the vulcanizing medium so as to maintain the elastomer product at the predetermined temperature for the remainder of the heating step, in a similar manner as in the embodiment of Figure 1, further includes the step of collecting a mixture of the inert gas and the vulcanizing medium upon termination of the heating process for steam separation of the mixture to derive the inert gas which is to be re-utilized for preshaping, etc. prior to the vulcanization of the elastomer products.

The modified process of Figure 3 as described above is particularly advantageous in that a still greater resource saving effect is achieved through the effective utilization of the discharged inert gas, with improved quality of the vulcanized finished products.

More specifically, the modified process shown in Figure 3 for vulcanization further comprises, in addition to the inert gas generating unit I and the vulcanizing unit V described as employed in the process of Figure 1, an inert gas recovery unit R. The inert gas recovery unit includes a steam separator S of a pressure vessel construction constituted by a mist separator Sm, a water feeding mechanism Sw, a water level controller LC and a hot water tank St, a return line connecting the low pressure storage tank LP with the steam separator S through a dehumidifier Dh, a cooler G3 and a pressure controller, a high pressure gas recovery line which is connected to the inner side of the metal mold 1 through a valve V5 provided in a parallel relation with the valve V4 for the high pressure gas discharge line, and which is also connected to the steam separator S through a recovery main pipe, a low pressure gas line which communicates with the inner side of the metal mould 1 through a valve V6 and also, with the steam separator S through a low pressure gas line, and further connected to the low pressure storage tank LP through an automatic control valve V7 and a gas supplementary pressure line, with the valve V7 being further connected to a valve V8 provided in the low pressure gas line through a pressure controller.

In the above modified process of Figure 3, since the process steps up to step (4) are generally the same as in the embodiment of Figure 1, only steps (5B) to (9B) which are specific to the modified process of Figure 3 will be described hereinbelow.

(5B) Upon termination of the heating process, the valve V3 for the cooling water line and the valve V5 for the high pressure gas recovery line are opened, simultaneously with the closing of the valve V2 for the high pressure gas line (in this case, the valve V4 for the high pressure gas discharge line is closed). Cooling water is supplied to the tire 2 through the bladder 3. Following the feeding of the cooling water as described above, the mixture of the inert gas and steam, and the mixture of the inert gas and cooling water enter the high pressure gas recovery line so as to be fed into the steam separator S in the inert gas recovery unit R. The mixtures as described above are not all collected, but recovered only for a predetermined period of time, for example, for about one minute before entering the discharge process. It is to be noted that the high pressure gas recovery line is provided for each vulcanizing unit separately from the existing discharge line.

(6B) The mixtures as referred to above are subjected to steam separation by the steam separator S, and inert gas under a low pressure, (for example 2—5 kg/cm$^2$G) i.e. 2.97—5.91×10$^5$Pa and at a temperature of from 40 to 120°C and a humidity of 100%, is recovered to be introduced into the low pressure gas line.

(7B) Before beginning the vulcanization (in this case the green tire 2 is mounted on a lower mould of the metal mould 1, with an upper mould being located at a raised position, although not particularly shown), the valve V6 of the low pressure gas line is opened, and the inert gas pressurized to have a desired green tire shaping pressure (for example, 0.1—3 gm/cm$^2$G) i.e. 1.11—3.95×10$^5$Pa by an operating air signal. As preliminarily set as desired, is supplied into the green tire 2 mounted on the lower mould through the bladder 3 for preshaping the green tire. Since the preshaping by the inert gas as described above is free from the disadvantages in the conventional shapings by compressed air or saturated steam, such as shortening of the life of the bladders and adverse effects on the qualities of tires due to large deviations in the shapes or shaping condition of the bladder resulting from undesirable cooling it contributes to the improvements of the bladder life and tire qualities.

(8B) The surplus inert gas in the recovery enters the return line, and, through the steps for cooling by the cooler G3 and dehumidification by the dehumidifier Dh, is fed into the low pressure storage tank LP of the inert gas generating unit I. It is to be noted that the return mechanism as described above is not necessarily required, if the stored inert gas is all consumed for the preshaping at all times.

(9B) The low pressure gas line is accompanied by the supplementary gas pressure line, which is connected from the low pressure tank LP of the inert gas generating unit I to the low pressure gas line through the automatic control valve V7, and arranged to supply the low pressure gas to the low pressure gas line by receiving a signal from the pressure controller so as to maintain the shaping pressure for the tire at the starting of the preshaping under stable conditions.

It should be noted here that, in the inert gas recovery unit R, hot water obtained from the waste heat of steam as a result of the steam separation may be stored in the hot water storage tank St so as to be suitably reutilized for boilers, heating and temperature control devices, etc.

It should also be noted that, in the inert gas generating unit I, oxygen at a high concentration drawn out from the adsorption tank CMS1 or CMS2 through the vacuum pump P can be effectively utilized, for example, for the air-exposure process of sewage treatment to improve the treating efficiency or for supply to boilers for the improvement of thermal efficiency.

In the modified process for the vulcanization shown in Figure 3, the inert gas at high purity preliminarily extracted from atmospheric air using molecular sieves is used as the heat retaining medium for part of the heating of elastomer products to replace the conventional vulcanizing medium, and thereafter, the inert gas is regenerated for re-utilization thereof for preshaping, etc prior to the vulcanization of the elastomer products.

Accordingly, in the modified process shown in Figure 3, since the used inert gas is effectively utilized without the necessity of employing fuel gas associated with petroleum, energy costs may be saved by approximately 70 to 80% as compared with the conventional vulcanizing processes (for example, a known process employing heated water throughout the heating process), in addition to the various advantages available by the embodiment of Figure 1.

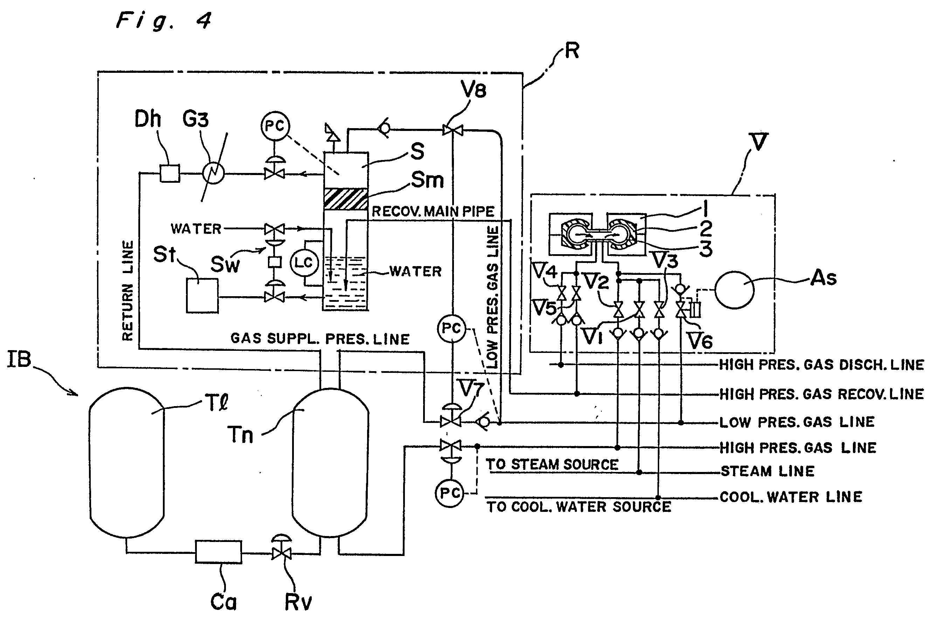

Referring further to Figure 4, there is shown a further modification of the arrangement of Figure 3. In this modification, the inert gas generating unit I, compressor C2, gas cooler G2, and high pressure storage tank HP in Figure 3 are also replaced by the nitrogen gas generating unit IB including the liquid $N_2$ storage tank T coupled, through the carburettor Ca and the pressure reduction valve Rv, to the nitrogen receiver tank Tn which is further connected to the high pressure gas line via the valve associated with the pressure controller and also to the supplementary gas pressure line as shown. In the arrangement of Figure 4, liquid nitrogen contained in the liquid $N_2$ storage tank T is formed, through the carburettor Ca and pressure reduction valve Rv, into nitrogen gas, which is utilized for the same purpose and in the same manner as the inert gas in the embodiment of Figure 3.

## Claims

1. A process for the vulcanization of elastomer products which comprises the steps of heating under pressure an elastomer product mounted in a metal mould by supplying thereto a vulcanizing medium, suspending the supply of the vulcanizing medium when the elastomer product has reached a predetermined temperature or when a predetermined time period has elapsed, and subsequently supplying an inert gas extracted from atmospheric air using molecular sieves which has an oxygen concentration therein of less than approximately 1000 ppm and maintained at least under approximately the same pressure as that of the vulcanizing medium as a heat retaining medium, so as to maintain the elastomer product at the predetermined temperature for the remainder of the heating step.

2. A process as claimed in claim 1 further including the step of, upon termination of the heating step, collecting a mixture of the inert gas and the vulcanizing medium.

3. A process as claimed in claim 2 wherein the inert gas contained in the mixture is obtained by steam separation for re-utilization of the inert gas for a preshaping of the elastomer product prior to the vulcanization of the elastomer product.

4. A process as claimed in any one of the preceding claims wherein the vulcanizing medium and inert gas are arranged to be supplied to the elastomer product through an expandable bag-like member.

5. A process as claimed in any one of the preceding claims wherein the molecular sieves are made of carbon.

6. A process as claimed in any one of the preceding Claims wherein the inert gas has an oxygen concentration therein of less than approximately 50 ppm.

7. A process as claimed in claim 6 wherein the inert gas has an oxygen concentration therein of approximately 4 to 5 ppm.

**Patentansprüche**

1. Verfahren zum Vulkanisieren elastomerer Gegenstände mit den folgenden Verfahrensschritten: Erwärmen eines in einer Metallform gehaltenen elastomeren Gegenstandes unter Druck durch Zuführen eines Vulkanisationsmediums, Unterbrechen der Zufuhr des Vulkanisationsmediums, wenn der elastomere Gegenstand eine vorgegebene Temperatur erreicht hat oder wenn ein vorgegebener Zeitraum abgelaufen ist, und anschließendes Zuführen eines Schutzgases aus der Umgebungsluft unter Verwendung von Molekularsieben, das eine Sauerstoffkonzentration von weniger als etwa 1000 ppm hat und zumindest unter etwa dem gleichen Druck steht wie das Vulkanisationsmedium als Wärmespeichermedium, um den elastomeren Gegenstand während des Restes der Erwärmungsstufe auf der vorgegebenen Temperatur zu halten.

2. Verfahren nach Anspruch 1, dadurch gekennzeichnet, daß nach dem Beenden der Erwärmungsstufe ein Gemisch aus dem Schutzgas und dem Vulkanisationsmedium gesammelt wird.

3. Verfahren nach Anspruch 2, dadurch gekennzeichnet, daß das in dem Gemisch enthaltene Schutzgas durch Dampftrennung erhalten wird zur Wiederverwendung des Schutzgases zum Vorformen des elastomeren Gegenstandes vor der Vulkanisation des elastomeren Gegenstandes.

4. Verfahren nach einem der vorstehenden Ansprüche, dadurch gekennzeichnet, daß das Vulkanisationsmedium und das Schutzgas dem elastomeren Gegenstand über ein expandierbares, beutelartiges Element zugeführt wird.

5. Verfahren nach einem der vorstehenden Ansprüche, dadurch gekennzeichnet, daß die Molekularsiebe aus Kohlenstoff hergestellt sind.

6. Verfahren nach einem der vorstehenden Ansprüche, dadurch gekennzeichnet, daß das Schutzgas eine Sauerstoffkonzentration von weniger als etwa 50 ppm enthält.

7. Verfahren nach Anspruch 6, dadurch gekennzeichnet, daß das Schutzgas eine Sauerstoffkonzentration von etwa 4 bis 5 ppm enthält.

## Revendications

1. Procédé de vulcanisation d'objets en élastomère, qui comprend les étapes consistant à chauffer sous pression un objet élastomère monté dans un moule métallique en lui fournissant un milieu provoquant la vulcanisation, à arrêter l'alimentation en milieu provoquant la vulcanisation quand l'objet en élastomère a atteint une température prédéterminée ou bien quand une période prédéterminée de temps s'est écoulée, et à fournir ensuite un gaz inerte, extrait à l'aide d'un tamis moléculaire de l'air atmosphérique, ayant une concentration en oxygène inférieure à environ 1000 ppm et qui est maintenu approximativement à la même pression que le milieu provoquant la vulcanisation, comme milieu de retenue de chaleur, de façon à maintenir pendant le reste de l'étape de chauffage l'objet en élastomère à la température prédéterminée.

2. Procédé selon la revendication 1, comprenant encore l'étape consistant, après achèvement de l'étape de chauffage, à collecter un mélange du gaz inerte et du milieu provoquant la vulcanisation.

3. Procédé selon la revendication 2, dans lequel le gaz inerte contenu dans le mélange est obtenu par séparation de la vapeur d'eau en vue de la réutilisation du gaz inerte pour un façonnage préliminaire de l'objet en élastomère, avant la vulcanisation de cet objet.

4. Procédé selon l'une quelconque des revendications précédentes, dans lequel la fourniture du milieu provoquant la vulcanisation et du gaz inerte à l'objet en élastomère est réalisée à l'aide d'un élément analogue à un sac gonflable.

5. Procédé selon l'une quelconque des revendications précédentes, dans lequel les tamis moléculaires sont en carbon.

6. Procédé selon l'une quelconque des revendications précédentes, dans lequel le gaz inerte contient une concentration en oxygène inférieure à environ 50 ppm.

7. Procédé selon la revendication 6, dans lequel le gaz inerte contient une concentration en oxygène d'environ 4 à 5 ppm (parties par million).

Fig. 1

HIGH PRES. GAS DISCH. LINE

HIGH PRES. GAS LINE

TO STEAM SOURCE — STEAM LINE

TO COOL. WATER SOURCE — COOL. WATER LINE

G1  COOL WATER  CMS1  LP  C2  COOL. WATER  HP

F  C1  GAS COOLER  CMS2  COOLER  G2  PC

WATER

HIGH O2 DISCHARGE

P

WATER DISCHARGE

0 050 956

*Fig. 2*

HIGH PRES. GAS DISCH. LINE
HIGH PRES. GAS LINE
TO STEAM SOURCE — STEAM LINE
— COOL. WATER LINE
TO COOL. WATER SOURCE

0 050 956

**Fig. 3**

Fig. 4

**0 050 956**